**Europäisches Patentamt**

**European Patent Office**

**Office européen des brevets**

(19)

(11) Veröffentlichungsnummer: **0 200 682**
A2

## (12) EUROPÄISCHE PATENTANMELDUNG

(21) Anmeldenummer: **86810180.9**

(22) Anmeldetag: **18.04.86**

(51) Int. Cl.⁴: **B 60 J 1/20**

(30) Priorität: **28.04.85 CH 1776/85**

(43) Veröffentlichungstag der Anmeldung:
**05.11.86 Patentblatt 86/45**

(84) Benannte Vertragsstaaten:
**AT BE DE FR GB IT SE**

(71) Anmelder: **Schmid, Paul**
**Birsigstrasse 98**
**CH-4011 Basel(CH)**

(72) Erfinder: **Schmid, Paul**
**Birsigstrasse 98**
**CH-4011 Basel(CH)**

(54) Fahrwindabweiser für Autos.

(57) Dieser Fahrwindabweiser, bestehend aus Kunststoff, setzt sich aus zwei Teilen zusammen: aus einem Fuss (5) und einem die Strömung ablenkenden Schild (1), der in den Fuss mittels einer Federzunge (3) eingerastet wird. Dies erfolgt automatisch dadurch, dass beim einschieben des Schildes in einen Schlitz des Fusses ein Vorsprung (6) der Federzunge in ein Loch des Schlitzes eingreift. Der Fahrwindabweiser wird vorne auf der Motorhaube mittels eines Kontaktklebestreifens befestigt.

Fig. 1 A
Fig. 1 C
Schnitt B-B

Fahrwindabweiser für Autos

Die Erfindung stellt sich die Aufgabe Mittel zu schaffen, die das Beschlagen der Windschutzscheibe von Motorfahrzeugen durch Regen und Schnee verringern und insbesondere das Aufprallen von Fremdkörpern, beispielsweise Insekten, weitgehend vermeiden.

Durch den erfingungsgemässen Fahrwindabweiser, dessen wesentliche Merkmale im Patentanspruch angeführt sind, ist es möglich, die Strömung über die Motorhaube gegen die Windschutzscheibe so umzulenken, dass Niederschläge und Fremdkörper vermehrt über dieselbe hinwegfliegen.

In der Zeichnung ist ein Ausführungsbeispiel der Erfindung dargestellt und zwar zeigen:

    Fig. 1a, 1b, 1c Frontansicht, Aufsicht bzw. Teilschnitt des Schildes

    Fig. 2 eine Seitenansicht des Fahrwindabweisers, geschnitten nach der
          Linie A – A in den Fig. 1 und 3

    Fig. 3 eine Aufsicht auf den Fuss

    Fig. 4 einen Schnitt durch den Fuss analog zu Fig. 2.

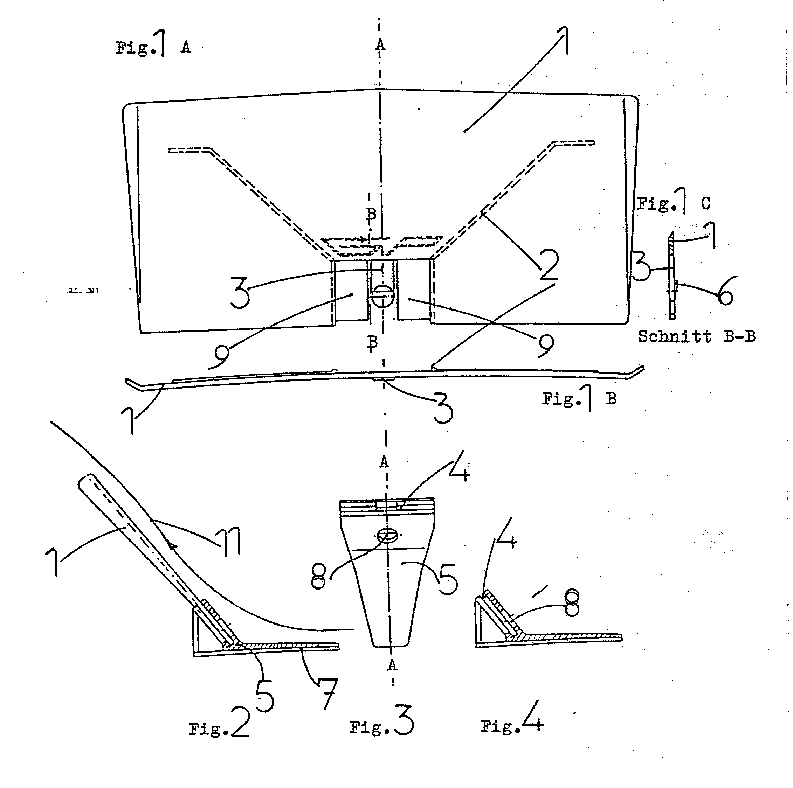

Der die Strömung ablenkende Schild 1, vorzugsweise aus transparentem Kunststoff, weist im allgemeinen rechteckige Form auf. Die diagonal verlaufenden Verstärkungsrippen 2 dienen der Erhöhung der Formstabilität des Schildes 1. Wie aus Fig. 2 ersichtlich, dient zur Halterung des Schildes 1 ein Fuss 5, der mittels eines Kontaktklebestreifens 7 auf der Motorhaube in deren vorderen Bereich befestigt wird. Der Fuss 5 weist einen Schlitz 4 auf, in den die Haltelappen 9 des Schildes 1 bei der Montage eingeführt werden. Zwischen den Haltelappen 9 ist, von diesen durch Sägeschnitte getrennt, eine Federzunge 3 mit einem Vorsprung 6 vorhanden, welch letzterer beim Einschieben des Schildes 1 in den Fuss 5 in ein Loch 8 des Fusses einrastet und damit die beiden Teile 1, 5 in ihrer relativen Lage zueinander fixiert. Soll der Strömungsschild zum Beispiel vor dem Einfahren in eine Waschanlage abgenommen werden, dann lässt sich dies einfach bewerkstelligen, indem durch Hineindrücken des Vorsprunges 6 in das Loch 8 die Verrigelung gelöst wird. Der Fuss besteht wie der Schild 1 vorzugsweise aus Kunststoff. In Fig. 2 ist durch eine Sromlinie 11 die fahrwindabweisende Wirkung des Schildes veranschaulicht.

Patentanspruch

Fahrwindabweiser für Autos, welcher auf der Motorhaube anzubringen ist, gekennzeichnet durch einen die Luftströmung nach oben ablenkenden Schild (1) der auf einem Fuss (5) durch einrasten einer Verriegelung (3, 6) abnehmbar befestigt ist, wobei der Fuss (5) zum abnehmbaren Anbringen auf der Motorhaube eingerichtet ist.

1/1

Fig.1 A

A

B

B

3

9

9

B

1

Fig.1 C

1

3

6

Schnitt B-B

1

3

Fig.1 B

A

4

8

5

11

1

5

7

A

Fig.2

Fig.3

4

8

5

Fig.4